(19) Europäisches Patentamt / European Patent Office / Office européen des brevets

(11) **EP 3 167 567 B1**

(12) **EUROPEAN PATENT SPECIFICATION**

(45) Date of publication and mention
of the grant of the patent:
**19.02.2020 Bulletin 2020/08**

(21) Application number: **15736267.4**

(22) Date of filing: **10.07.2015**

(51) Int Cl.:
*H04L 9/08* (2006.01)     *H04L 9/30* (2006.01)

(86) International application number:
**PCT/EP2015/065807**

(87) International publication number:
**WO 2016/005552 (14.01.2016 Gazette 2016/02)**

(54) **METHOD AND DEVICE FOR CRYPTOGRAPHIC KEY GENERATION**

VERFAHREN UND VORRICHTUNG ZUR ERZEUGUNG EINES KRYPTOGRAFISCHEN
SCHLÜSSELS

PROCÉDÉ ET DISPOSITIF DE GÉNÉRATION DE CLÉ CRYPTOGRAPHIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2014 EP 14306135**

(43) Date of publication of application:
**17.05.2017 Bulletin 2017/20**

(73) Proprietor: **InterDigital CE Patent Holdings
75017 Paris (FR)**

(72) Inventors:
• **JOYE, Marc**
  **F-35576 Cesson Sévigné (FR)**
• **BEN HAMOUDA, Fabrice**
  **F-92220 Bagneux (FR)**
• **LIBERT, Benoît**
  **F-69006 Lyon (FR)**

(74) Representative: **Ståhl, Björn Niclas et al
InterDigital CE Patent Holdings
20, rue Rouget de Lisle
92130 Issy-les-Moulineaux (FR)**

(56) References cited:
**WO-A1-2012/045628**

• **CLIFFORD COCKS: "An Identity Based
  Encryption Scheme Based on Quadratic
  Residues", LECTURE NOTES IN COMPUTER
  SCIENCE/COMPUTATIONAL SCIENCE >
  (EUROCRYPT )CHES 2008 (LNCS), SPRINGER
  VERLAG, DE, vol. 2260, 17 December 2001
  (2001-12-17), pages 360-363, XP002267993, ISBN:
  978-3-540-24128-7**
• **ZHENFU CAO ET AL: "More Efficient
  Cryptosystems From k<t>h-Power Residues",
  INTERNATIONAL ASSOCIATION FOR
  CRYPTOLOGIC RESEARCH,, vol.
  20130924:151251, 24 September 2013
  (2013-09-24), pages 1-22, XP061008184,**
• **MARC JOYE ET AL: "Efficient Cryptosystems
  from 2 k -th Power Residue Symbols", 26 May
  2013 (2013-05-26), ADVANCES IN CRYPTOLOGY
  EUROCRYPT 2013, SPRINGER BERLIN
  HEIDELBERG, BERLIN, HEIDELBERG, PAGE(S)
  76 - 92, XP047028441, ISBN: 978-3-642-38347-2
  the whole document**

**Description**

TECHNICAL FIELD

The present disclosure relates generally to cryptography, and in particular to a cryptosystem based on the Goldwasser-Micali cryptosystem.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The Goldwasser-Micali (GM) cryptosystem is a well-known public key cryptosystem that encrypts one bit of the plaintext at a time; put another way, the message space is $\{0,1\}^k$, with $k = 1$.

At *EUROCRYPT 2013,* Joye and Libert presented a generalized GM cryptosystem in which $k$ bits are encrypted at a time, i.e. the message space is $\{0,1\}^k$, with $k \geq 1$ [see Marc Joye and Benoît Libert. Efficient cryptosystems from 2k-th power residue symbols. In T. Johansson and P. Nguyen, editors, Advances in Cryptology - EUROCRYPT 2013, volume 7881 of Lecture Notes in Computer Science, pages 76-92. Springer, 2013.]. As in GM, the generalized scheme uses a composite $N = pq$ where $p$ and $q$ are prime, and $p,q \equiv 1 \pmod{2^k}$. In addition,

$$y \in \mathbb{J}_N \setminus \mathbb{QR}_N$$

and the public key is $pk = \{N,y,k\}$ while the private key is $sk = \{p, k\}$.

Given a plaintext message $m = \sum_{i=0}^{k-1} m_i \, 2^i$ with $m_i \in \{0,1\}$, the corresponding ciphertext $c$ is formed as $c = y^m x^{2^k} \bmod N$ for some random element $x \in \mathbb{Z}_N^*$. Plaintext message $m$ is then recovered from the ciphertext $c$ as the unique integer in $[0, 2^k[$ satisfying the relation

$$\left[\left(\frac{y}{p}\right)_{2^k}\right]^m \equiv \left(\frac{c}{p}\right)_{2^k} \quad (\mathrm{mods}\, p). \tag{1}$$

where $\left(\frac{y}{p}\right)_{2^k}$ denotes the $2^k$-th power residue symbol of $y$ modulo $p$, defined as $\left(\frac{y}{p}\right)_{2^k} = y^{\frac{p-1}{2^k}} \bmod p$. (It is noted that $a$ mods $p$ represents the absolute smallest residue of $a$ modulo $p$, namely, the complete set of absolute smallest residues are: -(p - 1)/2, ..., -1,0,1, ...,(p - 1)/2). Doing so 2nd power residue symbol (i.e., when $k = 1$) boils down to the classical Legendre symbol.) Solving Eq. (1) can be carried out with a variation of the Poligh-Hellman algorithm; see section 3.2 of the previously mentioned article.

The generalized GM cryptosystem as described in the previously mentioned article meets the standard security notion of semantic security under the quadratic residuosity assumption and the squared Jacobi symbol assumption [see the article with the same name by the same authors published in the Cryptology ePrint Archive as Report 2013/435].

In order to facilitate comprehension, the following notation is introduced. As already mentioned, let $N = pq$ be the product of two (odd) primes $p$ and $q.$ The set of integers whose Jacobi symbol is 1 is denoted by $\mathbb{J}_N$,

$$\mathbb{J}_N = \{a \in \mathbb{Z}_N^* | \left(\frac{a}{N}\right) = 1\};$$

the set of quadratic residues is denoted by $\mathbb{QR}_N$, $\mathbb{QR}_N = \{a \in \mathbb{Z}_N^* | \left(\frac{a}{p}\right) = \left(\frac{a}{q}\right) = 1\};$ and the set of integers whose Jacobi symbol is -1 is denoted by $\overline{\mathbb{J}}_N$,

$$\overline{\mathbb{J}}_N = \{a \in$$

$$\mathbb{Z}_N^* | \left(\frac{a}{N}\right) = -1\}.$$

It is to be noted that $\mathbb{QR}_N$ is a subset of $\mathbb{J}_N$.

**Definition 1 (Quadratic Residuosity Assumption).** Let RSAGen be a probabilistic algorithm that, given a security parameter $\kappa$, outputs primes $p$ and $q$ such that $p$, $q \equiv 1$ (mod $2^k$), and their product $N = pq$. The *Quadratic Residuosity* ($k$ - QR) assumption asserts that the function $\boldsymbol{Adv}_{\mathcal{D}}^{k-\mathrm{QR}}(1^\kappa),$ defined as the distance

$$\left| \Pr\left[\mathcal{D}(x, N) = 1 | x \stackrel{R}{\leftarrow} \mathbb{QR}_N\right] - \Pr\left[\mathcal{D}(x, N) = 1 | x \stackrel{R}{\leftarrow} \mathbb{J}_N \setminus \mathbb{QR}_N\right]\right|$$

is negligible for any probabilistic polynomial-time distinguisher $\mathcal{D}$; the probabilities are taken over the experiment of running $(N,p,q) \leftarrow$ RSAGen$(1^\kappa)$ and choosing at random $x \in \mathbb{QR}_N$ and

$$x \in \mathbb{J}_N \setminus \mathbb{QR}_N.$$

**Definition 2 (Squared Jacobi Symbol Assumption).** Let RSAGen be a probabilistic algorithm that, given a security parameter $\kappa$, outputs primes $p$ and $q$ such that $p$, $q \equiv 1$ (mod $2^k$), and their product $N = pq$. The *Squared Jacobi Symbol* ($k$ - SJS) assumption asserts that the function $\boldsymbol{Adv}_{\mathcal{D}}^{k-\mathrm{SJS}}(1^\kappa),$ defined as the distance

$$\left| \Pr\left[\mathcal{D}(y^2 \bmod N, N) = 1 | y \stackrel{R}{\leftarrow} \mathbb{J}_N\right] - \Pr\left[\mathcal{D}(y^2 \bmod N, N) = 1 | y \stackrel{R}{\leftarrow} \overline{\mathbb{J}}_N\right]\right|$$

is negligible for any probabilistic polynomial-time distinguisher $\mathcal{D}$; the probabilities are taken over the experiment of running $(N,p,q) \leftarrow$ RSAGen $(1^\kappa)$ and choosing at random

$$y \in \mathbb{J}_N$$

and

$$y \in \overline{\mathbb{J}}_N.$$

The case $k = 1$ corresponds to the GM cryptosystem which has indistinguishable encryptions (semantic security) *solely* under the standard Quadratic Residuosity assumption.

It is also noted that the generalized GM requires a special prime generation algorithms for the generation of $p$ and $q$ during key generation.

It will therefore be appreciated that it is desirable to provide a generalized GM cryptosystem whose semantic security solely relies on a quadratic residuosity assumption and in which the key generation is simplified.

The present disclosure provides such a generalized GM cryptosystem.

SUMMARY

In a first aspect, the disclosure is directed to a method as recited in claim 1.

In a first embodiment, the device generates a private key $sk = \{p,k\}$. It is advantageous that the device stores the private key $sk$.

In a second embodiment, the public key $pk$ is for use in a cryptosystem in which a message $m \in \mathcal{M}$, where $\mathcal{M} = \{0,1\}^k$, is encrypted by picking a random $x \in \mathbb{Z}_N^*$ and calculating a ciphertext $c = y^m x^{2^k} \bmod N$.

In a second aspect, the invention is directed to a cryptographic device as recited in claim 4.

In a first embodiment, the processing unit is further configured to generate a private key $sk = \{p,k\}$. It is advantageous that the processing unit is configured to store the private key $sk$, preferably in a memory or in the processing unit.

In a second embodiment, the processing unit is configured to output the public key via a communication interface. It is advantageous that the processing unit is configured to use a communication protocol to output the public key via the communication interface.

In a third embodiment, the cryptographic device belongs to one of the group of: a mobile device, a communication device, a game device, a set top box, a TV set, a tablet, a laptop and a cryptographic chip.

In a fourth embodiment, the public key $pk$ is for use in a cryptosystem in which a message $m \in \mathcal{M}$, where $\mathcal{M} = \{0,1\}^k$, is encrypted by picking a random $x \in \mathbb{Z}_N^*$ and calculating a ciphertext $c = y^m x^{2^k} \bmod N$.

In a third aspect, the disclosure is directed to a computer program product storing instructions that, when executed by a processor, perform the method of the first aspect.

BRIEF DESCRIPTION OF DRAWINGS

Preferred features of the present disclosure will now be described, by way of non-limiting example, with reference to the accompanying drawings, in which:

    Figure 1 illustrates a preferred embodiment; and
    Figure 2 provides background information.

DESCRIPTION OF EMBODIMENTS

It will be shown that, quite surprisingly, a small modification to the key generation procedure of the generalized GM cryptosystem enables its semantic security to rely solely on a quadratic residuosity assumption.

As already mentioned, the generalized GM cryptosystem defines primes $p$ and $q$ such that $p, q \equiv 1 \pmod{2^k}$. It is however observed that the decryption process only involves prime $p$.

This observation makes it possible to develop a new proof technique that allows to prove the semantic security when $q \equiv 3 \pmod 4$. Remarkably, the new security proof (presented hereafter for completeness) solely assumes the quadratic residuosity assumption for RSA moduli $N = pq$ where $p \equiv 1 \pmod{2^k}$ and $q \equiv 3 \pmod 4$.

Furthermore, a close inspection of the security proof offered in the article published in the Cryptology ePrint Archive shows that the very same proof carries on when $q \equiv 1 \pmod 4$. The proof crucially requires that the square roots of a square in $\mathbb{Z}_N^*$ all have the same Jacobi symbol. This is readily satisfied when $-1 \in \mathbb{QR}_N$, or equivalently when $p, q \equiv 1 \pmod 4$.

**Security analysis ($q \equiv 3 \pmod 4$)**

Let $N = pq$ be the product of two primes $p$ and $q$ with $p = 1 \pmod{2^k}$ for some $k \geq 1$. Let

$$\mathbb{J}_N = \{x \mid \left(\frac{x}{N}\right) = 1\}$$

and $\mathbb{QR}_N = \{x^2 | x \in \mathbb{Z}_N^*\}.$ For $0 \le i \le k$, consider the subsets $D_i$ of $\mathbb{J}_N$ given by

$$D_i = \{y^{2^i} \bmod N | y \in \mathbb{J}_N \setminus \mathbb{QR}_N\}$$

and define the subgroup of $2^k$-th residues $R_k = \{y^{2^k} \bmod N | y \in \mathbb{Z}_N^*\}.$

**Lemma 1.** *Let N = pq be the product of two large primes p and q where $p \equiv 1 \pmod{2^k}$ for some $k \ge 1$ and $q \equiv$ 3 (mod 4). Then, for any* $w \in \mathbb{QR}_N,$ *letting $W := w^{2^{i-1}}$ for a given $1 \le i \le k$, gives* $W \in R_k \cup \bigcup_{j=i}^{k-1} D_j.$

*Further, if w is uniform over $\mathbb{QR}_N$, then W is uniform over $D_j$ with probability* $\dfrac{1}{2^{j-i+1}}$ *for $i \le j \le k - 1$ and W is uniform over $R_k$ with probability* $\dfrac{1}{2^{k-i}}.$ *Proof. It is assumed that w is uniform over $\mathbb{QR}_N$.*

The case $i = k$ (which includes the case $k = 1$) yields $W = w^{2^{k-1}}$ with $w \in \mathbb{QR}_N.$ It is then readily verified that $W$ is uniform over $R_k$ with probability 1.

It is henceforth supposed that $i \le k - 1$ and $k \ge 2$. In particular, this implies $p \equiv 1 \pmod 4$ and thus $\left(\dfrac{-1}{p}\right) = 1.$ Denoting by $(\hat{w}_p, \hat{w}_q)$ the CRT representation of a square root $\hat{w}$ of $w$ (i.e., $\hat{w}_p = \hat{w} \bmod p$ and $\hat{w}_q = \hat{w} \bmod q$), the four square roots of $w$ modulo $N$ are given by $(\pm\hat{w}_p, \pm\hat{w}_q)$. Since $\left(\dfrac{-1}{q}\right) = -1,$ it can be assumed without loss of generality that $\left(\dfrac{\hat{w}_q}{q}\right) = \left(\dfrac{\hat{w}_p}{p}\right),$ or equivalently that

$$\hat{w} \in \mathbb{J}_N.$$

If $\hat{w} \in \mathbb{QR}_N$ the process can be re-iterated, and so on. More generally, $t$ is defined as the largest integer in $\{1,...,k - i\}$ such that $w = \hat{w}^{2^t}$ for some

$$\hat{w} \in \mathbb{J}_N.$$

It is then possible to write $W = \hat{w}^{2^{t+i-1}}$ for some

$$\hat{w} \in \mathbb{J}_N.$$

It is worth noting that since $t$ is the *largest* integer in the set $\{1,...,k - i\}$, $\hat{w} \in \mathbb{QR}_N$ only when $t = k - i$. Defining $j = t + i - 1$ (observe that $i \le j \le k - 1$), gives $W = \hat{w}^{2^j} \in D_j$ if $\hat{w} \notin \mathbb{QR}_N$ (i.e.,

$$\hat{w} \in \mathbb{J}_N \setminus \mathbb{QR}_N$$

) and $W = \hat{w}^{2^{k-1}} \in R_k$ if $\hat{w} \in \mathbb{QR}_N.$ The probability that $W \in D_j$ (for $i \le j \le k - 1$) is Pr $[w = \hat{w}^{2^t}$ and

$$\widehat{w} \notin \mathbb{QR}_N] = \frac{1}{2^t} = \frac{1}{2^{j-i+1}}$$ and the probability that $W \in R_k$ is

$$\mathrm{Pr}\,[\,W \notin \bigcup_{j=i}^{k-1} D_j\,] = 1 - \sum_{j=i}^{k-1} \frac{1}{2^{j-i+1}} = \frac{1}{2^{k-i}}.$$

**Theorem 1.** *For RSA moduli N = pq such that p $\equiv$ 1 (mod $2^k$) and q $\equiv$ 3 (mod 4), the Gap $2^k$-Residuosity assumption (defined in the previously mentioned paper published at EUROCRYPT) holds if the k - QR assumption (see Definition 1) holds. More precisely, for any Probabilistic Polynolial Time (PPT) distinguisher $\mathcal{A}$ against the latter, there exists a k - QR distinguisher B with comparable running time and for which*

$$\boldsymbol{Adv}_{\mathcal{A}}^{Gap-2^k-Res}(1^\kappa) \leq \frac{k+1}{2} \cdot \boldsymbol{Adv}_{\mathcal{B}}^{k-QR}(1^\kappa).$$

*[Here the k - QR assumption is defined for RSA moduli N = pq such that p $\equiv$ 1 (mod $2^k$) and q $\equiv$ 3 (mod 4).]*

*Proof.* Let $\mathcal{A}$ be an adversary against Gap - $2^k$ - Res running in time *t*. Write:

$$\epsilon_i = \mathrm{Pr}\,[\,\mathcal{A}(x,N) = 1 | x \xleftarrow{R} D_i\,],$$

*for i $\in$ {0,...,k - 1} and*

$$\epsilon_k = \mathrm{Pr}\,[\,\mathcal{A}(x,N) = 1 | x \xleftarrow{R} R_k\,].$$

The advantage of $\mathcal{A}$ against Gap - $2^k$ - Res is:

$$\boldsymbol{Adv}_{\mathcal{A}}^{\mathrm{Gap}-2^k-\mathrm{Res}}(1^\kappa) = |\epsilon_0 - \epsilon_k|.$$

First *k* distinguishers $\mathcal{B}_1, \dots, \mathcal{B}_k$ against *k* - QR are constructed as follows. $\mathcal{B}_i$ takes as input an RSA modulus N = pq, with p $\equiv$ 1 (mod $2^k$) and q $\equiv$ 3 (mod 4), and an element

$$w \in \mathbb{J}_N.$$

Its task is to decide whether *w* is uniform over

$$\mathbb{J}_N \setminus \mathbb{QR}_N$$

or uniform over $\mathbb{QR}_N$. To this ends, $\mathcal{B}_i$ chooses a random element $z \xleftarrow{R} \mathbb{Z}_N^*$. It then defines $x = z^{2^i} w^{2^{i-1}} \bmod N$ and feeds $\mathcal{A}$ with (*x,N*).

- If w is uniform over

$$\mathbb{J}_N \setminus \mathbb{QR}_N,$$

*x* is clearly uniform over $D_{i-1}$. Therefore, in that case, $\mathcal{B}$ outputs 1 with probability $\varepsilon_{i-1}$.

- If w is uniform over $\mathbb{QR}_N$, $\mathcal{B}$ outputs 1 with probability $\sum_{j=i}^{k} \frac{1}{2^{j-i+1}} \epsilon_j + \frac{1}{2^{k-i}} \epsilon_k$ according to Lemma 1.

Therefore, the (signed) advantage of $\mathcal{B}_i$ in solving $k$ - QR is

$$a_i = \epsilon_{i-1} - \left( \sum_{j=i}^{k} \frac{1}{2^{j-i+1}} \epsilon_j + \frac{1}{2^{k-i}} \epsilon_k \right) = \epsilon_{i-1} - \sum_{j=i}^{k} 2^{i-1} \beta_j \epsilon_j$$

with

$$\beta_j = \frac{1}{2^j} \text{ for } j \in \{1, \dots, k-1\} \text{ and } \beta_k = \frac{1}{2^{k-1}}.$$

The following probability distribution $\mathcal{P}$ over $\{1,\dots,k\}$ is considered:

$$\Pr_{\substack{R \\ X \leftarrow \mathcal{P}}} (X = i) = p_i = \begin{cases} \dfrac{2}{k+1} & \text{if } i = 1 \\ \dfrac{1}{k+1} & \text{if } i \geq 2 \end{cases}.$$

An adversary $\mathcal{B}$ against $k$ - QR is defined as follows: $\mathcal{B}$ chooses a random

$$i \overset{R}{\leftarrow} \mathcal{P}$$

and feeds $\mathcal{B}_i$ with its $k$ - QR challenge. The advantage of $\mathcal{B}$ is:

$$Adv_{\mathcal{B}}^{k-\text{QR}}(1^\kappa) = \left| \sum_{i=1}^{k} p_i \, a_i \right|$$

$$= \left| \sum_{i=1}^{k} p_i \, \epsilon_{i-1} - \sum_{i=1}^{k} p_i \sum_{j=i}^{k} 2^{i-1} \beta_j \epsilon_j \right|$$

$$= \left| \sum_{j=0}^{k-1} p_{j+1} \, \epsilon_j - \sum_{j=1}^{k} \sum_{i=1}^{j} 2^{i-1} p_i \beta_j \epsilon_j \right|$$

$$= \left| p_1 \epsilon_0 + \sum_{j=1}^{k-1} \left( p_{j+1} - \sum_{i=1}^{j} 2^{i-1} p_i \beta_j \right) \epsilon_j - \sum_{i=1}^{k} 2^{i-1} p_i \beta_k \epsilon_k \right|.$$

For $j \in \{1,\dots,k - 1\}$, $\beta_j = \frac{1}{2^j}$ and:

$$\sum_{i=1}^{j} 2^{i-1} p_i \beta_j = \sum_{i=1}^{j} 2^{i-j-1} p_i = 2^{-j} p_1 + \sum_{i=2}^{j} 2^{i-j-1} p_j$$

$$= 2^{1-j} \frac{1}{k+1} \left( 1 + \sum_{i=2}^{j} 2^{i-2} \right) = 2^{1-j} \frac{1}{k+1} 2^{j-1} = \frac{1}{k+1} = p_{j+1}.$$

In addition:

$$\sum_{i=1}^{k} 2^{i-1} p_i \beta_k = \sum_{i=1}^{k} 2^{i-k} p_i = \frac{1}{k+1} \left( 2^{2-k} + \sum_{i=2}^{k} 2^{i-k} \right) = 2^{2-k} \frac{1}{k+1} \left( 1 + \sum_{i=2}^{k} 2^{i-2} \right)$$

$$= \frac{2}{k+1}.$$

Therefore, the advantage of $\mathcal{B}$ is

$$\boldsymbol{Adv}_{\mathcal{B}}^{k-\text{QR}}(1^{\kappa}) = \left| \frac{2}{k+1} \epsilon_0 + 0 - \frac{2}{k+1} \epsilon_k \right| = \frac{2}{k+1} \boldsymbol{Adv}_{\mathcal{A}}^{\text{Gap}-2^k-\text{Res}}(1^{\kappa}),$$

which concludes the proof.    □

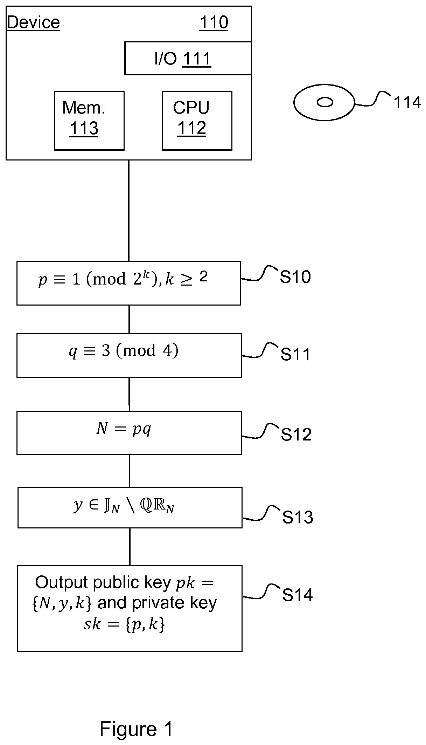

Figure 1 illustrates an embodiment in which $q \equiv 3 \pmod 4$.

Figure 1 shows a cryptographic device 110 comprising an interface 111 configured for communication with other devices (not shown), at least one hardware processing unit ("CPU") 112 and memory 113. The cryptographic device also comprises other necessary hardware and software components such as internal connections, but these are not shown to simplify the illustration. Also shown is a non-transitory computer program storage medium 114 that stores instruction that, when executed by a processing unit, perform the key generation method KeyGen of the first embodiment.

In more detail, the proposed encryption scheme of the preferred embodiment is the tuple (KeyGen , Encrypt, Decrypt) defined as follows:

KeyGen ($1^{\kappa}$) Given a security parameter $\kappa$, KeyGen defines an integer $k \geq 2$, randomly generates primes $p \equiv 1 \pmod{2^k}$, step S10, and $q \equiv 3 \pmod 4$, step S11, and sets, step S12, $N = pq$. It also picks, step S13,

$$y \in \mathbb{J}_N \setminus \mathbb{QR}_N.$$

The public key $pk = \{N,y,k\}$ and the private key $sk = \{p,k\}$ are output, step S14.

Encrypt($pk,m$) Let

$$\mathcal{M} = \{0,1\}^k.$$

To encrypt a message

$$m \in \mathcal{M}$$

(seen as an integer in $\{0,...,2^k - 1\}$), Encrypt picks a random $x \in \mathbb{Z}_N^*$ and returns the ciphertext $c = y^m x^{2^k} \bmod N$.

Decrypt(*sk,c*) Given $c \in \mathbb{Z}_N^*$ and the private key *sk* = {*p,k*}, the algorithm first computes $z = \left(\frac{c}{p}\right)_{2^k}$ and then finds *m* ∈ {0,...,2$^k$ - 1} such that the relation

$$\left[\left(\frac{y}{p}\right)_{2^k}\right]^m = z \pmod{p}$$

holds.

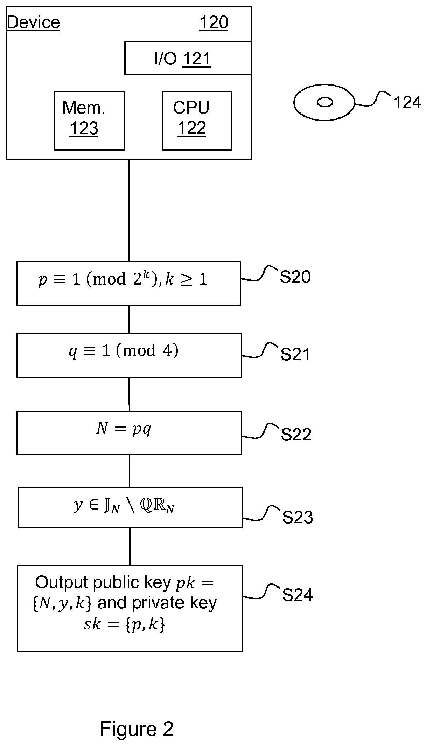

Figure 2 provides background information in which *q* ≡ 1 (mod 4). It is noted that the case where *k* = 2 corresponds to the prior art Generalized GM.

Figure 2 shows a cryptographic device 120 comprising an interface 121 configured for communication with other devices (not shown), at least one hardware processing unit ("CPU") 122 and memory 123. The cryptographic device also comprises other necessary hardware and software components such as internal connections, but these are not shown to simplify the illustration. Also shown is a non-transitory computer program storage medium 124 that stores instruction that, when executed by a processing unit, perform the key generation method KeyGen.

In more detail, the encryption scheme
is the tuple (KeyGen , Encrypt, Decrypt) defined as follows:

KeyGen(1$^\kappa$) Given a security parameter $\kappa$, KeyGen defines an integer *k* ≥ 1, randomly generates primes *p* ≡ 1 (mod 2$^k$), step S20, and *q* ≡ 1 (mod 4), step S21, and sets *N* = *pq*; step S22. It also picks

$$y \in \mathbb{J}_N \setminus \mathbb{QR}_N,$$

step S23. The public key *pk* = {*N,y,k*} and the private key *sk* = {*p,k*} are output, step S24.
Encrypt(*pk,m*) Let

$$\mathcal{M} = \{0,1\}^k.$$

To encrypt a message

$$m \in \mathcal{M}$$

(seen as an integer in {0,...,2$^k$ - 1}), Encrypt picks a random $x \in \mathbb{Z}_N^*$ and returns the ciphertext *c* = *y$^m$x$^{2^k}$* mod *N*.

Decrypt(*sk, c*) Given $c \in \mathbb{Z}_N^*$ and the private key *sk* = {*p,k*}, the algorithm first computes $z = \left(\frac{c}{p}\right)_{2^k}$ and then finds *m* ∈ {0,...,2$^k$ - 1} such that the relation

$$\left[\left(\frac{y}{p}\right)_{2^k}\right]^m = z \pmod{p}$$

holds.

It is noted that *q* ≡ 1 (mod 2$^k$) also means that *q* ≡ 1 (mod 4), but the present method can make it easier to generate *q* since there are more possibilities. A variant excludes *q* ≡ 1 (mod 2$^k$).

In a variant, the modulus *N* is equal to a integer multiple of the product of the primes *p,q*.

According to specific embodiments, the interface 111, 121 is can be a wireline interface (for example a bus interface such as USB (Universal Serial Bus)) or a wireless interface (such as a IEEE 802.11 interface, WiFi® or a Bluetooth® interface); the interface can be a wide area network interface, a local area network interface or a HDMI (High Definition Multimedia Interface) interface.

According to different embodiments, the cryptographic device 110, 120 uses a communication protocol such as HTTP, IP, or FLUTE to transmit the public key.

According to different embodiments, the cryptographic device 110, 120 stores the private key in a memory, such as a random access memory (RAM) or in the processing unit 112, 122.

According to different embodiments, the cryptographic device 110, 120 belongs to a set comprising:

- a mobile device;
- a communication device;
- a game device;
- a set top box;
- a TV set;
- a tablet (or tablet computer);
- a laptop; and
- a cryptographic chip.

An advantage of the preferred embodiment, i.e., when $q = 3 \pmod 4$) is security. The notion of semantic security is already met under a quadratic residuosity assumption. In particular, the squared Jacobi symbol assumption is not necessary.

A second advantage of the preferred embodiment is a simplified key generation process. Only prime $p$ requires a specialized prime generation algorithm as the one described by Joye and Paillier [see Marc Joye and Pascal Paillier. Fast generation of prime numbers on portable devices: An update. In L. Goubin and M. Matsui, editors, Cryptographic Hardware and Embedded Systems - CHES 2006, volume 4249 of Lecture Notes in Computer Science, pages 160-173. Springer, 2006]. It is noted that a random (form-free) prime $p$ is congruent to 3 (mod 4) with a probability of $\frac{1}{2}$ (it is congruent to 1 (mod 4) otherwise). Form-free primes are much easier to generate than other primes.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method for generation of a cryptographic public key *pk* for use in a cryptosystem in which a message

$$m \in \mathcal{M},$$

where

$$\mathcal{M} = \{0,1\}^k,$$

is encrypted by picking a random $x \in \mathbb{Z}_N^*$ and calculating a ciphertext $c = y^m x^{2k} \bmod N$, the method comprising, in a device (110; 120):

- generating (S10; S20) a first prime $p \equiv 1 \pmod{2^k}$, where $k \geq 2$ is an integer;
- generating a second prime $q \equiv 3 \pmod 4$ (S11);
- computing (S12; S22) a modulus $N$ that is a multiple of the product between the first prime $p$ and the second prime $q$;
- picking (S13; S23) an integer

$$y \in \mathbb{J}_N \setminus \mathbb{QR}_N,$$

where $\mathbb{J}_N$ is the set of integers whose Jacobi symbol is 1 and $\mathbb{QR}_N$ is the set of quadratic residues; and
- outputting (S14; S24) the public key $pk = \{N,y,k\}$.

2. The method of claim 1, further comprising generating a private key $sk = \{p,k\}$.

3. The method of claim 2, further comprising storing the private key $sk$.

4. A cryptographic device (110; 120) comprising at least one processing unit (112; 122) configured to:

   - generate a first prime $p \equiv 1 \pmod{2^k}$, where $k \geq 2$ is an integer;
   - generate a second prime $q \equiv 3 \pmod 4$;
   - compute a modulus $N$ that is a multiple of the product between the first prime $p$ and the second prime $q$;
   - pick an integer

$$y \in \mathbb{J}_N \setminus \mathbb{QR}_N,$$

   where $\mathbb{J}_N$ is the set of integers whose Jacobi symbol is 1 and $\mathbb{QR}_N$ is the set of quadratic residues; and
   - output a public key $pk = \{N,y,k\}$ for use in a cryptosystem in which a message

$$m \in \mathcal{M},$$

   where

$$\mathcal{M} = \{0,1\}^k,$$

   is encrypted by picking a random $x \in \mathbb{Z}_N^*$ and calculating a ciphertext $c = y^m x^{2^k} \bmod N$.

5. The cryptographic device of claim 4, wherein the at least one processing unit (112; 122) is further configured to generate a private key $sk = \{p,k\}$.

6. The cryptographic device of claim 5, wherein the at least one processing unit is configured to store the private key $sk$.

7. The cryptographic device of claim 6, wherein the at least one processing unit is configured to store the private key $sk$ in a memory (113, 123) or in the at least one processing unit.

8. The cryptographic device of claim 4, wherein the at least one processing unit is configured to output the public key via a communication interface (111, 121).

9. The cryptographic device of claim 8, wherein the at least one processing unit is configured to use a communication protocol to output the public key via the communication interface (111, 121).

10. The cryptographic device of claim 4, wherein the cryptographic device belongs to one of the group of: a mobile device, a communication device, a game device, a set top box, a TV set, a tablet, a laptop and a cryptographic chip.

11. A non-transitory computer program product (114; 124) storing instructions that, when executed by at least one processor, perform the method of claim 1.


**Patentansprüche**

1. Verfahren zur Erzeugung eines kryptografischen öffentlichen Schlüssels pk zur Verwendung in einem Schlüsselsystem, in dem eine Nachricht $m \in \mathcal{M}$, wobei $\mathcal{M} = \{0, 1\}^k$ ist, durch Entnehmen eines zufälligen $x \in Z_N^*$ und Berechnen eines verschlüsselten Texts c = $y^m x^{2k}$ mod N verschlüsselt wird, wobei das Verfahren in einer Vorrichtung (110; 120) umfasst:

- Erzeugen (S10; S20) einer ersten Primzahl p ≡ 1 (mod $2^k$), wobei k ≥ 2 eine ganze Zahl ist;
- Erzeugen einer zweiten Primzahl q ≡ 3 (mod 4) (S11);
- Berechnen (S12; S22) eines Moduls N, der ein Vielfaches des Produkts zwischen der ersten Primzahl p und der zweiten Primzahl q ist;
- Entnehmen (S13; S23) einer ganzen Zahl y ∈ $J_N$ \ $QR_N$, wobei **$J_N$** die Menge ganzer Zahlen ist, deren Jacobi-Symbol 1 ist, und **$QR_N$** die Menge quadratischer Residuen ist; und
- Ausgeben (S14; S24) des öffentlichen Schlüssels pk = {N, y, *k*}.

2. Verfahren nach Anspruch 1, das ferner das Erzeugen eines privaten Schlüssels sk = {p, k} umfasst.

3. Verfahren nach Anspruch 2, das ferner das Speichern des privaten Schlüssels sk umfasst.

4. Kryptografische Vorrichtung (110; 120), die mindestens eine Verarbeitungseinheit (112; 122) umfasst, die konfiguriert ist zum:

- Erzeugen einer ersten Primzahl p ≡ 1 (mod $2^k$), wobei k ≥ 2 eine ganze Zahl ist;
- Erzeugen einer zweiten Primzahl q ≡ 3 (mod 4);
- Berechnen eines Moduls N, der ein Vielfaches des Produkts zwischen der ersten Primzahl p und der zweiten Primzahl q ist;
- Entnehmen einer ganzen Zahl y ∈ **$J_N$** \ **$QR_N$**, wobei **$J_N$** die Menge ganzer Zahlen ist, deren Jacobi-Symbol 1 ist, und **$QR_N$** die Menge quadratischer Residuen ist; und
- Ausgeben eines öffentlichen Schlüssels pk = {N, y, k} zur Verwendung in einem Schlüsselsystem, in dem eine Nachricht $m \in \mathcal{M}$, wobei $\mathcal{M} = \{0, 1\}^k$ ist, durch Entnehmen eines zufälligen $x \in Z_N^*$ und Berechnen eines verschlüsselten Texts c = $y^m x^{2k}$ mod N verschlüsselt wird.

5. Kryptografische Vorrichtung nach Anspruch 4, wobei die mindestens eine Verarbeitungseinheit (112; 122) ferner dafür konfiguriert ist, einen privaten Schlüssel sk = {p, k} zu erzeugen.

6. Kryptografische Vorrichtung nach Anspruch 5, wobei die mindestens eine Verarbeitungseinheit dafür konfiguriert ist, den privaten Schlüssel sk zu speichern.

7. Kryptografische Vorrichtung nach Anspruch 6, wobei die mindestens eine Verarbeitungseinheit dafür konfiguriert ist, den privaten Schlüssel sk in einem Speicher (113, 123) oder in der mindestens einen Verarbeitungseinheit zu speichern.

8. Kryptografische Vorrichtung nach Anspruch 4, wobei die mindestens eine Verarbeitungseinheit dafür konfiguriert ist, den öffentlichen Schlüssel über eine Kommunikationsschnittstelle (111; 121) auszugeben.

9. Kryptografische Vorrichtung nach Anspruch 8, wobei die mindestens eine Verarbeitungseinheit dafür konfiguriert ist, zum Ausgeben des öffentlichen Schlüssels über die Kommunikationsschnittstelle (111, 121) ein Kommunikationsprotokoll zu verwenden.

10. Kryptografische Vorrichtung nach Anspruch 4, wobei die kryptografische Vorrichtung zu einer der folgenden Gruppe gehört: einer Mobilvorrichtung, einer Kommunikationsvorrichtung, einer Spielevorrichtung, einer Set-Top-Box, einem Fernsehgerät, einem Tablet, einem Laptop und einem kryptografischen Chip.

11. Nichttransitorisches Computerprogrammprodukt (114; 124), das Anweisungen speichert, die, wenn sie durch mindestens einen Prozessor ausgeführt werden, das Verfahren nach Anspruch 1 ausführen.

**Revendications**

1. Procédé de génération d'une clé publique cryptographique *pk* à utiliser dans un cryptosystème dans lequel un message $m \in M$, où $M = \{0,1\}^k$, est chiffré en sélectionnant un $x \in z_N^*$ aléatoire et en calculant un texte chiffré *c* = $y^m x^{2k}$ *mod N,* le procédé comprenant, dans un dispositif (110, 120) :

   - la génération (S10, S20) d'un premier nombre premier *p* = 1 (mod $2^k$), où $k \geq 2$ est un entier ;
   - la génération d'un deuxième nombre premier *q* = 3 (mod 4) (S11) ;
   - le calcul (S12, S22) d'un module *N* qui est un multiple du produit entre le premier nombre premier *p* et le deuxième nombre premier *q ;*
   - la sélection (S13, S23) d'un entier $y \in J_N^* \setminus QR_N$, où $J_N$ est l'ensemble d'entiers dont le symbole de Jacobi est 1 et QR$_N$ est l'ensemble de résidus quadratiques ; et
   - la génération (S14, S24) de la clé publique *pk = {N, y, k}.*

2. Procédé selon la revendication 1, comprenant en outre la génération d'une clé privée *sk = {p, k}.*

3. Procédé selon la revendication 2, comprenant en outre le stockage de la clé privée *sk.*

4. Dispositif cryptographique (110, 120) comprenant au moins une unité de traitement (112, 122) configurée pour :

   - générer un premier nombre premier *p* = 1 (mod $2^k$), où $k \geq 2$ est un entier ;
   - générer un deuxième nombre premier *q* = 3 (mod 4) ;
   - calculer un module *N* qui est un multiple du produit entre le premier nombre premier *p* et le deuxième nombre premier *q ;*
   - sélectionner un entier $y \in J_N^* \setminus QR_N$, où J$_N$ est l'ensemble d'entiers dont le symbole de Jacobi est 1 et QR$_N$ est l'ensemble de résidus quadratiques ; et
   - générer une clé publique *pk = {N, y, k}* à utiliser dans un cryptosystème dans lequel un message $m \in M$, où $M = \{0,1\}^k$, est chiffré en sélectionnant un $x \in z_N^*$ aléatoire et en calculant un texte chiffré *c* = $y^m x^{2k}$ mod *N.*

5. Dispositif cryptographique selon la revendication 4, dans lequel l'au moins une unité de traitement (112, 122) est en outre configurée pour générer une clé privée *sk = {p, k}.*

6. Dispositif cryptographique selon la revendication 5, dans lequel l'au moins une unité de traitement est configurée pour stocker la clé privée *sk.*

7. Dispositif cryptographique selon la revendication 6, dans lequel l'au moins une unité de traitement est configurée pour stocker la clé privée *sk* dans une mémoire (113, 123) ou dans l'au moins une unité de traitement.

8. Dispositif cryptographique selon la revendication 4, dans lequel l'au moins une unité de traitement est configurée pour sortir la clé publique via une interface de communication (111, 121).

9. Dispositif cryptographique selon la revendication 8, dans lequel l'au moins une unité de traitement est configurée pour utiliser un protocole de communication pour générer la clé publique via l'interface de communication (111, 121).

10. Dispositif cryptographique selon la revendication 4, dans lequel le dispositif cryptographique appartient à un dispositif mobile, un dispositif de communication, un dispositif de jeu, un décodeur, un téléviseur, une tablette, un ordinateur portable ou une puce cryptographique.

11. Programme non transitoire lisible sur ordinateur (114, 124) stockant des instructions qui, lorsqu'elles sont exécutées par au moins un processeur, mettent en œuvre le procédé selon la revendication 1.

Device          <u>110</u>

I/O <u>111</u>

Mem.
<u>113</u>

CPU
<u>112</u>

~114

$p \equiv 1 \pmod{2^k}, k \geq 2$    S10

$q \equiv 3 \pmod{4}$    S11

$N = pq$    S12

$y \in \mathbb{J}_N \setminus \mathbb{QR}_N$    S13

Output public key $pk = \{N, y, k\}$ and private key $sk = \{p, k\}$    S14

Figure 1

Device 120

I/O 121

Mem. 123

CPU 122

124

$$p \equiv 1 \ (\mathrm{mod} \ 2^k), k \geq 1$$

S20

$$q \equiv 1 \ (\mathrm{mod} \ 4)$$

S21

$$N = pq$$

S22

$$y \in \mathbb{J}_N \setminus \mathbb{QR}_N$$

S23

Output public key $pk = \{N, y, k\}$ and private key $sk = \{p, k\}$

S24

Figure 2

## REFERENCES CITED IN THE DESCRIPTION

### Non-patent literature cited in the description

- Efficient cryptosystems from 2k-th power residue symbols. **MARC JOYE ; BENOÎT LIBERT.** Advances in Cryptology - EUROCRYPT 2013, volume 7881 of Lecture Notes in Computer Science. Springer, 2013, vol. 7881, 76-92
- *the Cryptology ePrint Archive as Report,* 2013, 435
- Fast generation of prime numbers on portable devices: An update. **MARC JOYE ; PASCAL PAILLIER.** Cryptographic Hardware and Embedded Systems - CHES 2006, volume 4249 of Lecture Notes in Computer Science. Springer, 2006, vol. 4249, 160-173